# EUROPÄISCHE PATENTANMELDUNG

(11) **EP 0 815 933 A1**
(43) Veröffentlichungstag der Anmeldung: **07.01.1998**
(21) Anmeldenummer: 97109045.1
(22) Anmeldetag: 04.06.1997
(51) Int. Cl.: B01J 8/02

(54) **Vorrichtung zur Katalytischen Entfernung von Sauerstoff aus Flüssigkeiten**

(30) Priorität: 21.06.1996 DE 19624851
(71) Anmelder: Linde Aktiengesellschaft, 65189 Wiesbaden (DE)
(72) Erfinder: Matt, Konrad, Dr.-Ing., 80634 München (DE)
(74) Vertreter: Kasseckert, Rainer

(57) **Zusammenfassung**

Die Erfindung betrifft eine Vorrichtung zur Sauerstoffentfernung aus Flüssigkeiten mit einem einen Flüssigkeitszulauf (2) und -ablauf (6) aufweisenden Behälter (1), der ein sauerstoffreduzierend wirkendes Katalysatorbett (3) enthält. Es wird vorgeschlagen, daß das Katalysatorbett (3) durch gegeneinander abgeschlossene Einbauten (5) in säulenartige Kammern aufgeteilt ist, die von der Flüssigkeit in Längsrichtung durchströmbar sind. Die einzelnen Kammern weisen jeweils eine Querschnittfläche von höchstens ca. 0,2 m² sowie eine Katalysatorbetthöhe von höchstens ca. 900 mm auf. Bevorzugt beträgt das Verhältnis von Katalysatorbetthöhe/Kammerdurchmesser mindestens 3.

## Beschreibung

Die Erfindung betrifft eine Vorrichtung zur Sauerstoffentfernung aus Flüssigkeiten mit einem einen Flüssigkeitszulauf und -ablauf aufweisenden Behälter, der ein sauerstoffreduzierend wirkendes Katalysatorbett enthält.

Die katalytische Reduktion von Sauerstoff in wäßrigen Medien wird meist in abwärts durchströmten Festbettreaktoren durchgeführt. Diese Reaktoren zeichnen sich durch einen einfachen, robusten Aufbau aus und sind aus der Ionenaustauschertechnik bekannt.

Das Katalysatormaterial besteht aus einem perlförmigen Trägermaterial (derzeit werden Träger aus Styrol/Divinylbenzol-Copolymeren, PMMA, Aluminiumoxid und Aktivkohle eingesetzt) und der aktiven Außenschicht, bestehend aus einem Metall der Platingruppe, vorzugsweise Pallakium (Pd). Dieses Katalysatormaterial ist in dem Reaktor zu einem Katalysatorbett aufgeschüttet.

Die Geometrie dieser Reaktoren kann sich in der Praxis einer "schlanken Säule" oder einem "dicken Behälter" annähern.

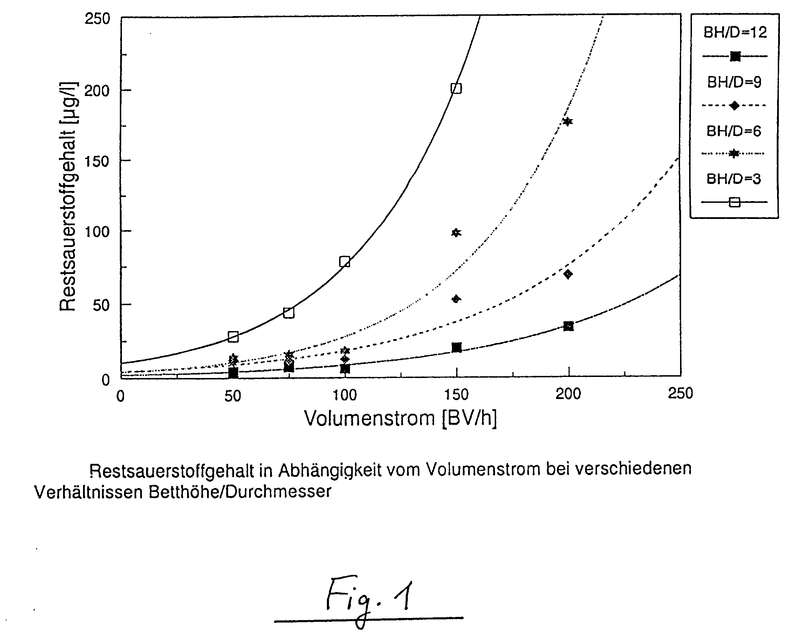

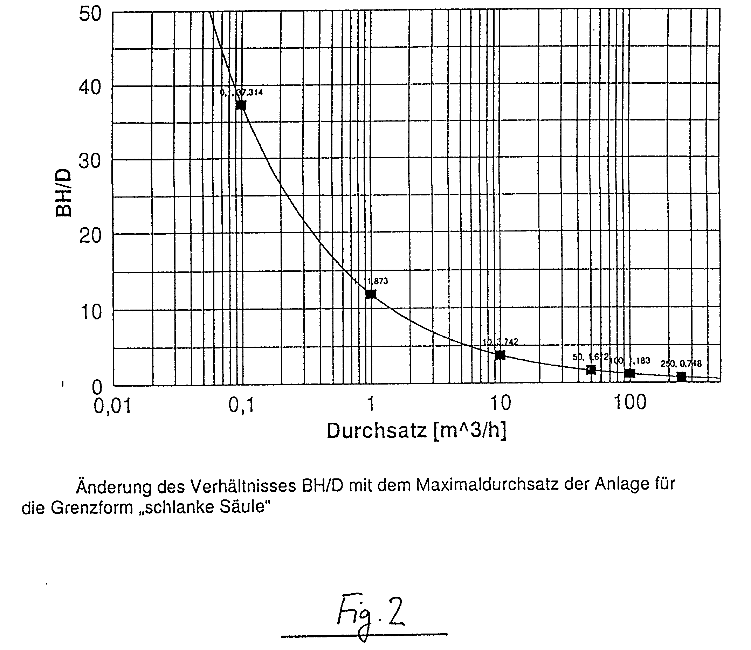

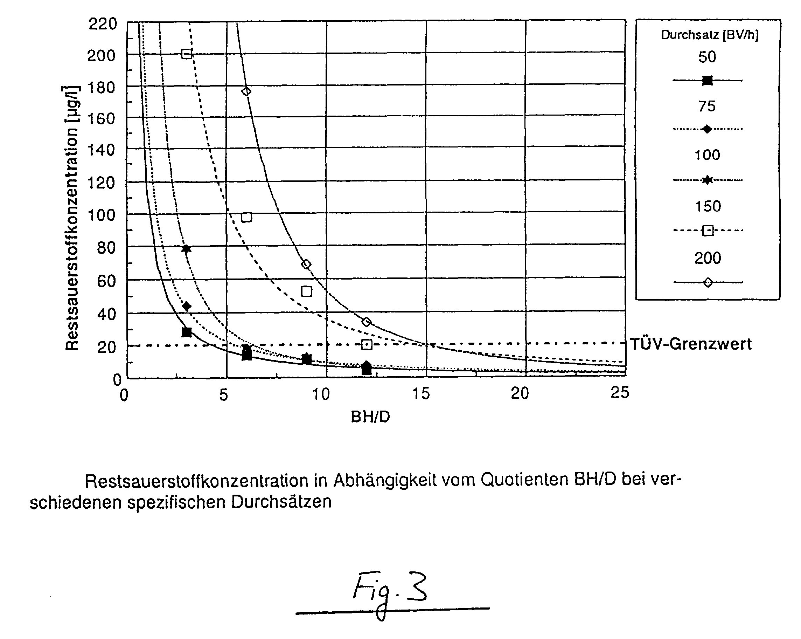

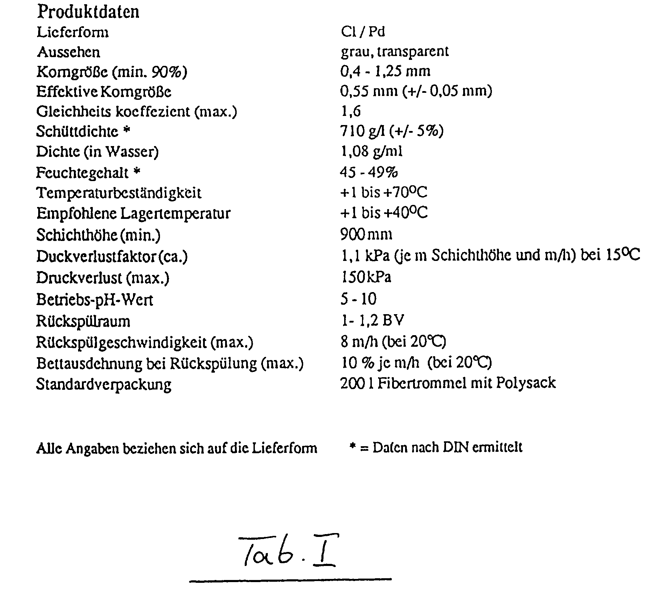

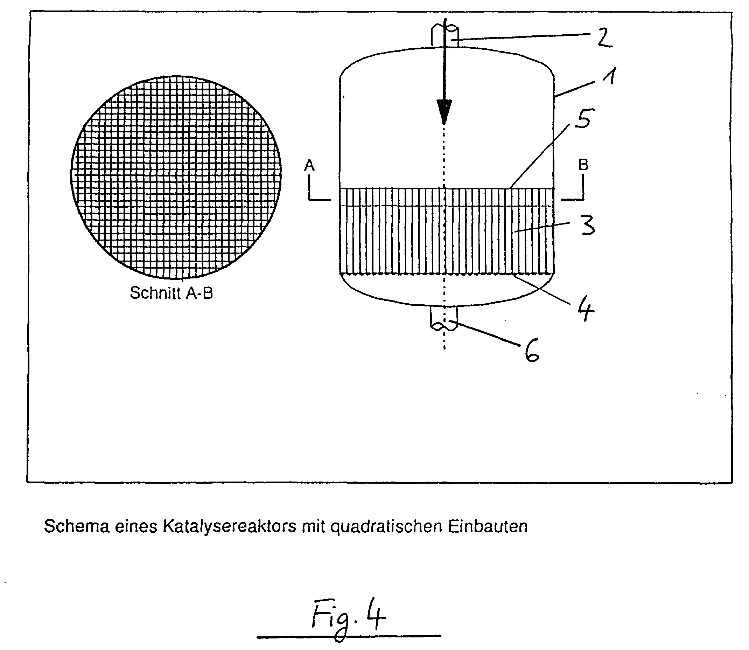

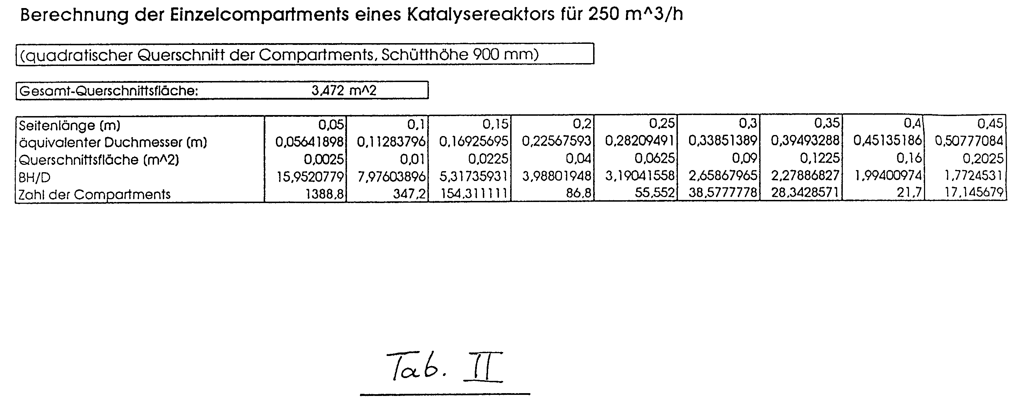

Da die Eliminierungsleistung des Katalysatormaterials mit steigendem Verhältnis Betthöhe/Reaktordurchmesser bei gegebener Durchströmung mit Wasser konstanter O2-Konzentration , ausgedrückt in Bettvolumen/Zeiteinheit, zunimmt (Figur 1), ist in der Praxis bei gegebener Katalysatormenge eine möglichst "schlanke Säule" (= hohes Betthöhe/Durchmesser-Verhältnis) anzustreben.

Die Forderung nach einem möglichst geringen Druckverlust in der Katalysatorschüttung (geringe Pumpenenergie) läßt dagegen den "dicken Behälter" vorteilhaft erscheinen.

Beide Grenzformen können bei konventionellem Design des Reaktionsbehälters jedoch nur angenähert verwirklicht werden, wobei die zulässigen Betriebsparameter des Katalysatormaterials der Annäherung an diese beiden Formen Grenzen setzen. Sie liegen zudem i.d.R. sehr eng beieinander.

Dies soll anhand eines kommerziellen Katalysators (Bayer AG, Katalysator K6333, siehe Tabelle I) erläutert werden. Wir gehen von den Daten des obengenannten Katalysators und folgenden Rohwasserdaten aus:
- O2-Konzentration im Rohwasser:: 10 mg/l
- Rohwasservolumenstrom:: 0,1, 1, 10, 50,
100 und 250 m³/h
- Rohwassertemperatur:: konstant
- spezifischer Wasserdurchsatz:: 80 BV/h

Die Geometrie der "schlanken Säule" wird begrenzt durch den höchstzulässigen Druckverlust in der Katalysatorschüttung, d.h. Δpₘₐₓ=1,5 bar, in unserem Beispiel entspricht das einer max. Schütthöhe von 1306 mm.

Die Geometrie des "dicken Behälters" wird (in Reaktoren mit einem Duchmesser > 500 mm!) durch die minimal zulässige Katalysatorschütthöhe von 900 mm limitiert.

Diese Grenze bedarf einer Erläuterung: Großflächige Schüttungen tendieren dazu vom zuströmenden Wasser an Stellen erhöhter Turbulenz "ausgewaschen" zu werden; es bilden sich Kuhlen, die einen geringeren Druckverlust aufweisen, bevorzugt und - aufgrund der geringeren Schichthöhe an diesen Stellen - auch rascher durchströmt werden. Die geringere Kontaktzeit führt (vgl Fig. 1) zu einer geringeren O2-Eliminierung, die gesamte Eliminierungsleistung des Reaktors sinkt.

In der Praxis zeigt sich, daß die beiden Grenzgeometrien relativ eng beieinander liegen und weit von den optimalen Verhältnissen Betthöhe (BH)/Reaktorduchmesser (D) entfernt sind (Vgl. Fig. 2). Die Quotienten BH/D liegen im obengenannten Beispiel für die "schlanke Säule" zwischen 0,748 bei 250 m³/h und 3,742 bei 10 m³/h. Generell werden somit die Verhältnisse mit zunehmender Anlagengröße ungünstiger.

Wie Figur 1 zeigt, sind davon sowohl die minimal erreichbare O2-Restkonzentration als auch die Abhängigkeit der O2-Restkonzentration vom spezifischen Durchsatz (in BV/h) betroffen.

Insbesondere bei Reaktoren für große Durchsätze besteht die Gefahr einer ungenügenden Eliminierungsleistung aufgrund des mit sinkendem Quotienten BH/D bei gegebenem Durchsatz stark ansteigenden Restsauerstoffgehalts (vgl. Figur 1 und 3).

Gerade bei hohen Durchsätzen bestehen durch die durch Δpₘₐₓ limitierte Schütthöhe große Probleme, ein akzeptables BH/D-Verhältnis zu erreichen.

In der Praxis führt das dazu, daß es bei großen Reaktoren zunehmend schwieriger wird, die erforderliche Eliminierungsleistung, insbesondere bei höheren spezifischen Durchsätzen, sicherzustellen.

Ein Weg dazu wäre eine Überdimensionierung des Reaktors, um die spezifische Durchsatzleistung in BV/h zu senken (vgl. Figur 1). Dies bedeutet jedoch wegen der damit verbundenen Vergrößerung des Katalysatorvolumens erhebliche Mehrkosten für den Katalysator (Preis ca. DM 35 - 50/l).

Der vorliegenden Erfindung liegt daher die Aufgabe zugrunde, eine Vorrichtung der eingangs genannten Art so ausgestalten, daß bei geringer benötigter Katalysatormenge und niedrigem Druckverlust in der Schüttung eine hohe Eliminierungsleistung erzielt wird.

Diese Aufgabe wird erfindungsgemäß dadurch gelöst, daß das Katalysatorbett durch gegeneinander abgeschlossene Einbauten in säulenartige Kammern aufgeteilt ist, die von der Flüssigkeit in Längsrichtung durchströmbar sind, wobei die einzelnen Kammern jeweils eine Querschnittfläche von höchstens ca. 0,2 m² sowie eine Katalysatorbetthöhe von höchstens ca. 900 mm aufweisen.

Bevorzugt weisen die einzelnen Kammern jeweils ein Verhältnis von Katalysatorbetthöhe zu Kammerdurchmesser von mindestens 3 auf.

Die Erfindung ist insbesondere für Reaktoren vom Grundtyp "dicker Behälter" vorgesehen. Mit der Erfindung wird erreicht, daß die spezifischen Nachteile dieses Reaktortyps umgegangen werden und die Vorteile des Reaktortyps "dicker Behälter" mit denen des Reaktortyps "schlanke Säule" kombiniert werden. Dies wird dadurch ermöglicht, daß gegeneinander abgeschlossene Einbauten in einem Reaktor vom Grundtyp "dicker Behälter" eingesetzt werden, die das Katalysatorbett in einzelne schlanke Kammern aufteilen. Jede Kammer stellt so für sich einen Einzelreaktor vom Grundtyp "schlanke Säule" mit dessen spezifischen Vorteilen dar. Diese schlanken Einzelreaktoren weisen eine Querschnittsfläche von höchstens ca. 0,2 m², insbesondere höchstens 0,196 m², auf, d.h. bei kreisrundem Querschnitt ergäbe sich ein Durchmesser von höchstens ca. 500 mm. Damit entfällt die Limitierung der Katalysatorschütthöhe auf mindestens 900 mm, d.h. es können geringere Schütthöhen mit geringerem Druckverlust gewählt werden. Gleichzeitig weisen "schlanke Reaktoren" grundsätzlich günstigere BH/D-Verhältnisse auf.

Gemäß einer besonders bevorzugten Ausführungsform der Erfindung beträgt die Querschnittfläche der einzelnen Kammern jeweils weniger als 0,03 m². Ein BH/D-Verhältnis von über 5 erweist sich als besonders vorteilhaft.

Vorzugsweise weisen die Kammern einen polygonalen, insbesondere quadratischen Querschnitt auf.

Die Erfindung eignet sich für alle Reaktoren vom Grundtyp "dicker Behälter", d.h. für Reaktoren mit Behälterquerschnitten über ca. 0,2 m² (entsprechend einem Durchmesser von über 500 mm bei kreisrundem Behälterquerschnitt). Die Vorteile der Erfindung kommen besonders bei Reaktoren mit großen Gesamtquerschnittsflächen von z. B. mehr als 3 m², die für hohe Durchsätze ausgelegt sind, zum Tragen.

Im Gegensatz zu einer Parallelschaltung einer größeren Zahl baulich getrennter Einzelreaktoren, die technisch sehr aufwendig, teuer und mit einem hohen Platzbedarf verbunden wäre, stellt die erfindungsgemäße Lösung eine kompakte Einheit dar, die nur einen geringen Investitionsaufwand erfordert und eine besonders hohe Eliminationsleistung bezogen auf den Platzbedarf bietet.

Im folgenden sind die beigefügten Figuren und Tabellen aufgelistet:

Die Figuren 1 bis 3 zeigen die grundsätzlichen Zusammenhänge bei der katalytischen Sauerstoffentfernung aus wäßrigen Medien.

Im einzelnen zeigen:
- Figur 1:: eine graphische Darstellung des Restsauerstoffgehalts in Abhängigkeit vom Volumenstrom bei verschiedenen Verhältnissen Betthöhe/Durchmesser(BH/D).
- Figur 2:: eine graphische Darstellung der Änderung des Verhältnisses BH/D mit dem Maximaldurchsatz der Anlage für die Grenzform "schlanke Säule"
- Figur 3:: eine graphische Darstellung der Restsauerstoffkonzentration in Abhängigkeit vom Quotienten BH/D bei verschiedenen spezifischen Durchsätzen

Außerdem zeigt
- Tabelle I:: die Produktdaten des Katalysatormaterials K6333 der Fa. BAYER

Die Bedeutung der in den Figuren 1 bis 3 dargestellten Zusammenhänge und der in Tabelle I genannten Daten wurden in der Beschreibungseinleitung bei der Schilderung des Standes der Technik ausführlich erläutert.

Darüberhinaus zeigen:
- Figur 4:: eine schematische Darstellung eines Beispiels für einen erfindungsgemäßen Reaktor.
- Tabelle II:: verschiedene Beispiele für die Dimensionierung eines erfindungsgemäßen Reaktors für einen Wasserdurchsatz von 250 m³/h.

Bei dem in Figur 4 gezeigten Ausführungsbeispiel handelt es sich um einen Reaktor mit einem Reaktorbehälter 1 zur katalytischen Entfernung von Sauerstoff aus Wasser, das dem Reaktor 1 über einen Zulauf 2 von oben zugegeben wird. Das Wasser fließt in Pfeilrichtung durch den Reaktor 1 nach unten und durchströmt das Katalysatorbett 3, das aus einem auf einem Siebboden 4 aufgeschütteten Katalysatormaterial mit den in Tabelle I angegebenen Produktdaten besteht. Mittels Einbauten 5 ist das Katalysatorbett 3 in einzelne, vertikale, schlanke und oben sowie unten offene Kammern aufgeteilt. Diese Kammern stellen schlanke, säulenartige und parallelgeschaltete Einzelreaktoren dar, durch die das Wasser hindurchströmt. Am unteren Ende des Reaktorbehälters 1 wird das vom Sauerstoff weitgehend befreite Wasser über einem Ablauf 6 abgezogen.

Während der Reaktorbehälter 1 dem Grundtyp "dicker Behälter" zuzurechnen ist, also eine Gesamtquerschnittsfläche von über 0,196 m² (entsprechend einem Durchmesser von über 500 mm bei kreisrundem Querschnitt) aufweist, zählen die durch die Einbauten 5 gebildeten Einzelreaktoren zum Grundtyp "schlanke Säule", da sie jeweils Querschnittsflächen von weniger als 0,196 m² aufweisen. Damit entfällt die Limitierung der Katalysatorschütthöhe, d.h. es können geringere Schütthöhen mit geringerem Druckverlust gewählt werden.

Im Schnitt A-B der Figur 4 ist zu erkennen, daß die durch die Einbauten 5 gebildeten

Kammern einen quadratischen Querschnitt aufweisen. Beispiele für konkrete Dimensionierungen des in Figur 4 gezeigten Reaktors und der Einzelkammern sind in Tabelle II aufgelistet. Die Dimensionierungen wurden für einen Wasserdurchsatz von 250 m³/h ausgelegt.

## Patentansprüche

1. Vorrichtung zur Sauerstoffentfernung aus Flüssigkeiten mit einem einen Flüssigkeitszulauf (2) und -ablauf (6) aufweisenden Behälter (1), der ein sauerstoffreduzierend wirkendes Katalysatorbett (3) enthält, **dadurch gekennzeichnet**, daß das Katalysatorbett (3) durch gegeneinander abgeschlossene Einbauten (5) in säulenartige Kammern aufgeteilt ist, die von der Flüssigkeit in Längsrichtung durchströmbar sind, wobei die einzelnen Kammern jeweils eine Querschnittfläche von höchstens ca. 0,2 m² sowie eine Katalysatorbetthöhe von höchstens ca. 900 mm aufweisen.

2. Vorrichtung nach Anspruch 1, dadurch gekennzeichnet, daß die einzelnen Kammern ein Verhältnis von Katalysatorbetthöhe/Kammerdurchmesser von mindestens 3 aufweisen.

3. Vorrichtung nach Anspruch 1 oder 2, dadurch gekennzeichnet, daß die einzelnen Kammern jeweils eine Querschnittsfläche von weniger als 0,03 m² aufweisen.

4. Vorrichtung nach einem der Ansprüche 1 bis 3, dadurch gekennzeichnet, daß die einzelnen Kammern ein Verhältnis von Katalysatorbetthöhe/Kammerdurchmesser von über 5 aufweisen.

5. Vorrichtung nach einem der Ansprüche 1 bis 4, dadurch gekennzeichnet, daß die Kammern einen polygonalen Querschnitt aufweisen.

6. Vorrichtung nach Anspruch 5, dadurch gekennzeichnet, daß die Kammern einen quadratischen Querschnitt aufweisen.

7. Vorrichtung nach einem der Ansprüche 1 bis 6, dadurch gekennzeichnet, daß der Behälter (1) eine Gesamtquerschnittsfläche von mindestens 3 m² aufweist.
